Europäisches Patentamt

European Patent Office

Office européen des brevets

(19)

(11) Veröffentlichungsnummer : **0 135 799**
**B1**

(12) **EUROPÄISCHE PATENTSCHRIFT**

(45) Veröffentlichungstag der Patentschrift :
09.11.88

(51) Int. Cl.⁴ : **F 03 D 3/04**, F 03 D 1/04,
F 03 D 9/00, F 03 D 11/04

(21) Anmeldenummer : 84109979.9

(22) Anmeldetag : 22.08.84

(54) Windkraftmaschine zur Stromerzeugung.

(30) Priorität : 25.08.83 DE 3330722

(43) Veröffentlichungstag der Anmeldung :
03.04.85 Patentblatt 85/14

(45) Bekanntmachung des Hinweises auf die Patenterteilung : 09.11.88 Patentblatt 88/45

(84) Benannte Vertragsstaaten :
AT CH DE LI

(56) Entgegenhaltungen :
DE-A- 3 014 971
DE-C- 600 039
US-A- 2 454 058
US-A- 3 996 741
US-A- 4 018 543
Eckert-chnell, Axial-und Radialkompressoren, Springer-Verlag 1961, S.109

(73) Patentinhaber : Eismann, Walter Martin
Gustav Freytagstrasse 11
D-7550 Rastatt (DE)

(72) Erfinder : Eismann, Walter Martin
Gustav Freytagstrasse 11
D-7550 Rastatt (DE)

## Beschreibung

Aus der DE-C-600 039 (Paulsen) ist eine Vorrichtung zur Energieerzeugung unter Ausnutzung des natürlichen Kaminzuges bekannt geworden. Dort ist innerhalb eines Gebäuses in einem Kamin mindestens ein Windturbinenrad oberhalb von Leiteinrichtungen angeordnet und treibt einen Generator an. Wie jedoch aus diesem Dokument hervorgeht, ist diese Vorrichtung nur zur Deckung eines beschränkten Energiebedarfs geeignet, zumal nur jeweils die Höhe des Bauwerks die Stärke des verfügbaren Luftzugs bestimmt. Zu einem verstärkten Luftzug führen die kennzeichnenden Merkmale des Anspruchs 1 :

a) in einem Berg führen mehrere Stollen schräg nach oben und münden in den Fuß eines senkrecht nach oben gebauten Kaminschachts.

b) Als Leiteinrichtung befindet sich in mindestens 80 m Höhe ein Keil, durch welchen die Luftströmung beschleunigt wird.

c) 10 m unterhalb des Keils müssen die Wände des Kamins ganz glatt sein.

Weitere vorteilhafte Ausgestaltungen sind Gegenstand der abhängigen Ansprüche 2-5. Dies wird im Einzelnen auch in der nachfolgenden Figuren beschreibung beschrieben :

Fig. I Der senkrecht nach oben gebaute Kamin, mit aus 4 Richtungen eingebaute Stollen die schräg nach oben führen.

Fig. II Grundriß von oben gesehen.

Fig. III Mehrere Lufteingänge im rechteckigen Kamin dargestellt, von oben gesehen.

Fig. IV Ein Fundament mit Eingang zum rechteckigen Kamin, dasselbe kann auch für runde Kamine gebaut werden.

Fig. V Dieser Keil muß zu jedem Kamin vorgesehen sein nur in rechteckiger Form verwendbar. Er hat die Aufgabe, den Wind durch die Enge zu beschleunigen, um die Turbine anzutreiben. Das wichtigste ist bei diesem Keil, daß er mindestens in 80-100 m Höhe vorgesehen sein muß. Voraussetzung ist hier, daß 10 m vor dem Keil die Wände ganz glatt sind.

Fig. VI Der mit großer Geschwindigkeit ankommende Wind treibt hier die Windkraftmaschine an.

Fig. VII Die Windturbine ; hier sind in regelmäßigen Abständen eingenietete Stahlbleche zu sehen, links ganz verdeckt, rechts sind zur besseren Anschaulichkeit die einzelnen Felder in Schnittdarstellung mit dem Bodenblech zusehen. So kann der Wind nur in die Schaufeln blasen, wodurch die Windturbine angetrieben wird.

Fig. VIII Das Rechteck von unten gesehen mit offenem Keilkanal durch den der Wind muß.

Fig. IX Ein Rechteck mit 2 Windturbinen u. 1 Generator.

Fig. X Windturbinen mit einzelnen Generatoren.

Fig. XI Zum Abstellen der Windturbinen ist nach links im Kamin ein abweichender Gang gebaut, der unten eine Stahlklappe hat.

Fig. XII die zur Veranschaulichung der Sicherheitsmaßnahmen dient. Links im Beton eingelassener beweglicher Keil ist zum öffnen u. schließen bei « Überdruck ». Das vor dem Lufteinlaß zur Windturbine eingebaute bewegliche Blech ist zur Umleitung des Windes, u. zum Anhalten der Windturbine.

Fig. XIII Diese Windturbine in Propellerform ist nur für runde Kamine. Im Längsschnitt gesehen links und rechts vom Generator sind 2 durchgehende T-Träger eingebaut, die zur Halterung u. Transport dienen. Zur Sicherheit kann man die Wartung gewährleisten, wenn man die ganze Windturbine mit Propeller in ein nahtloses Mannesmann-Rohr einbaut. Hier kann man Turbine und Generator aufhängen wie einen Eimer und das Ganze in Verbindung mit Schiene u. Laufkatze rein u. rausschieben.

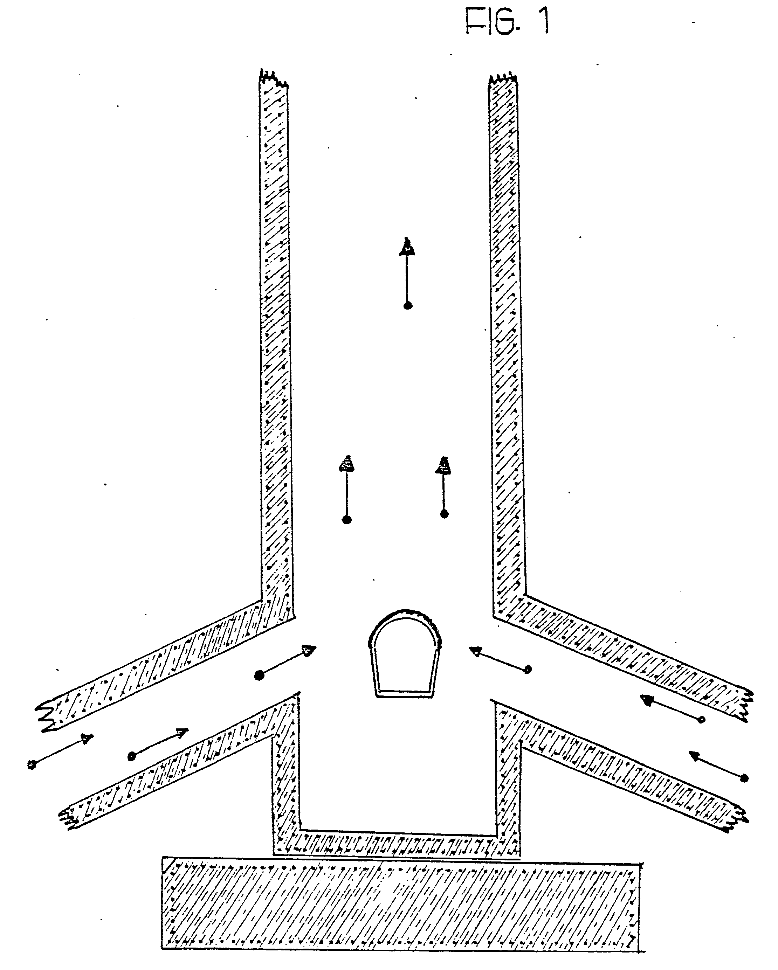

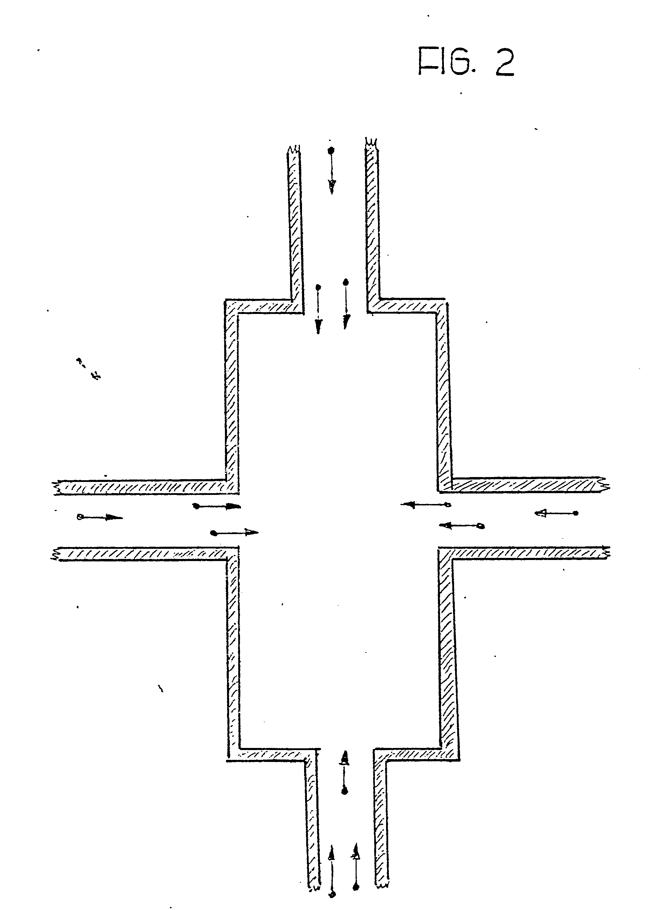

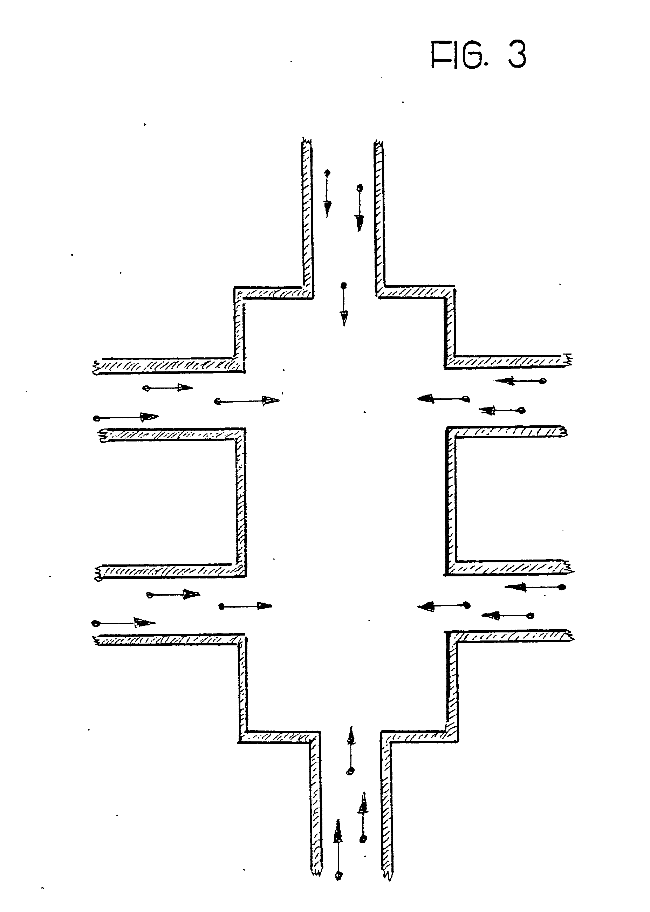

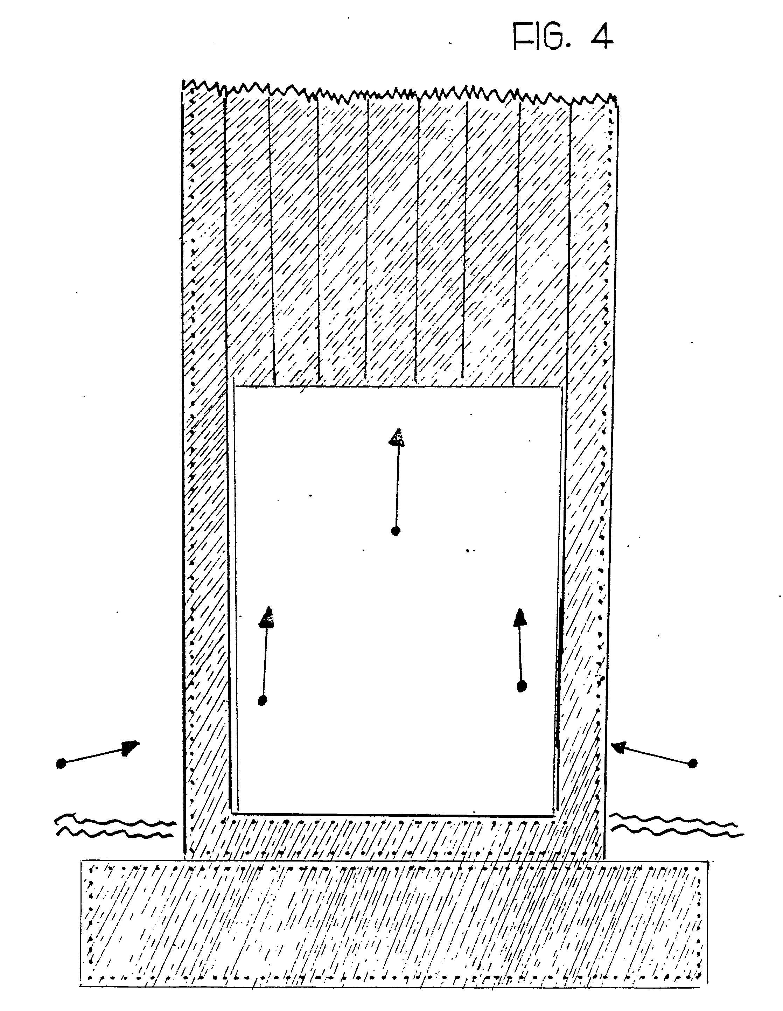

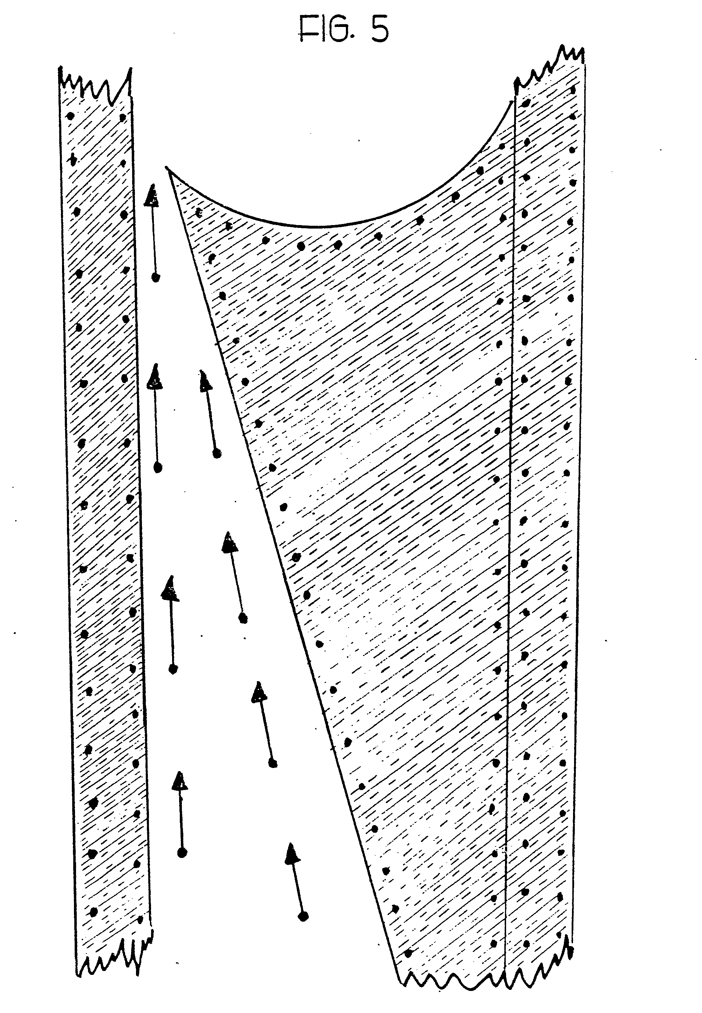

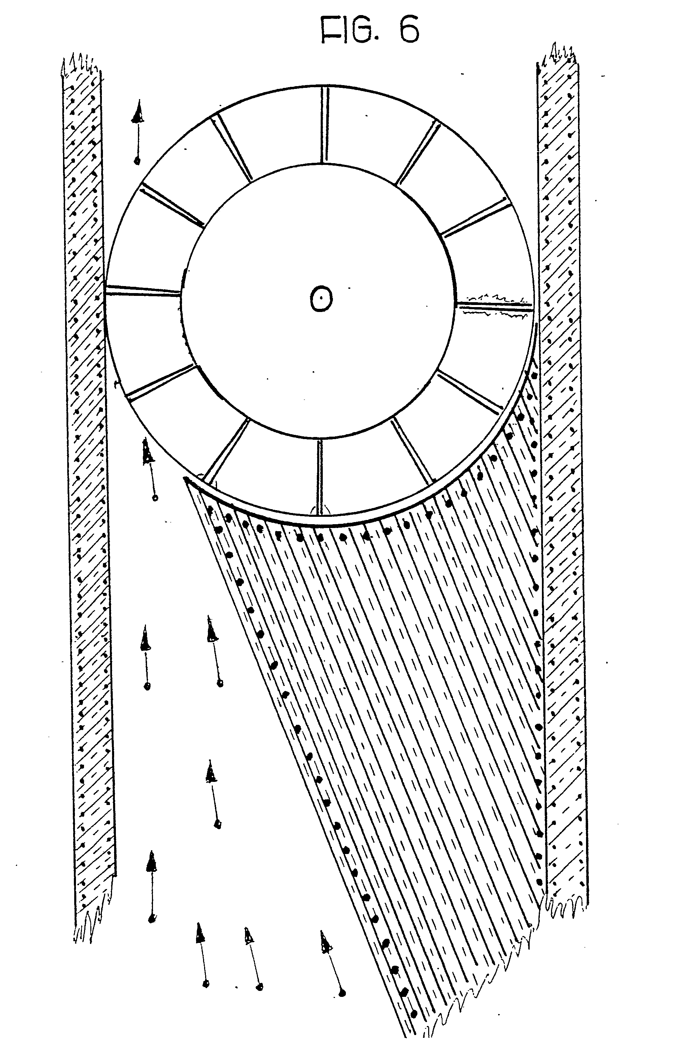

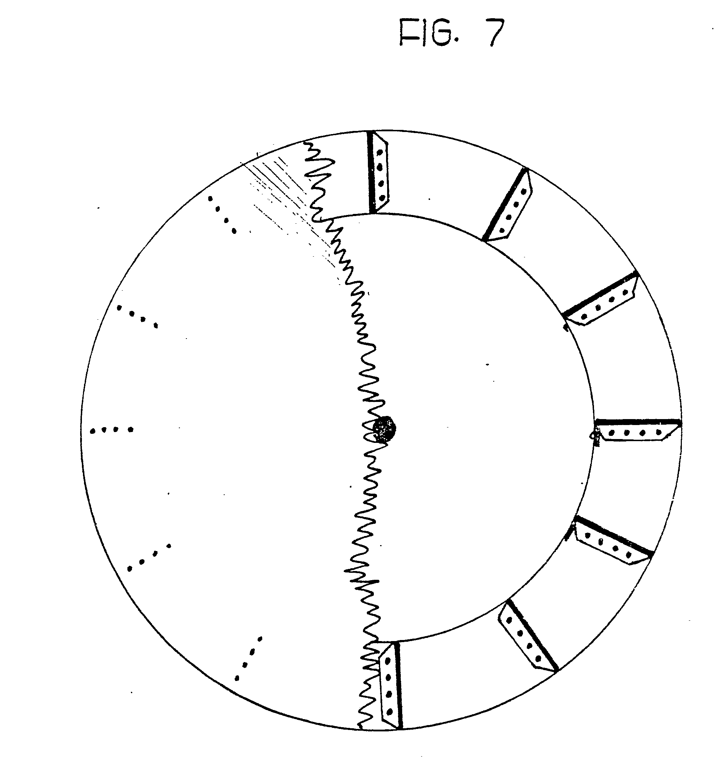

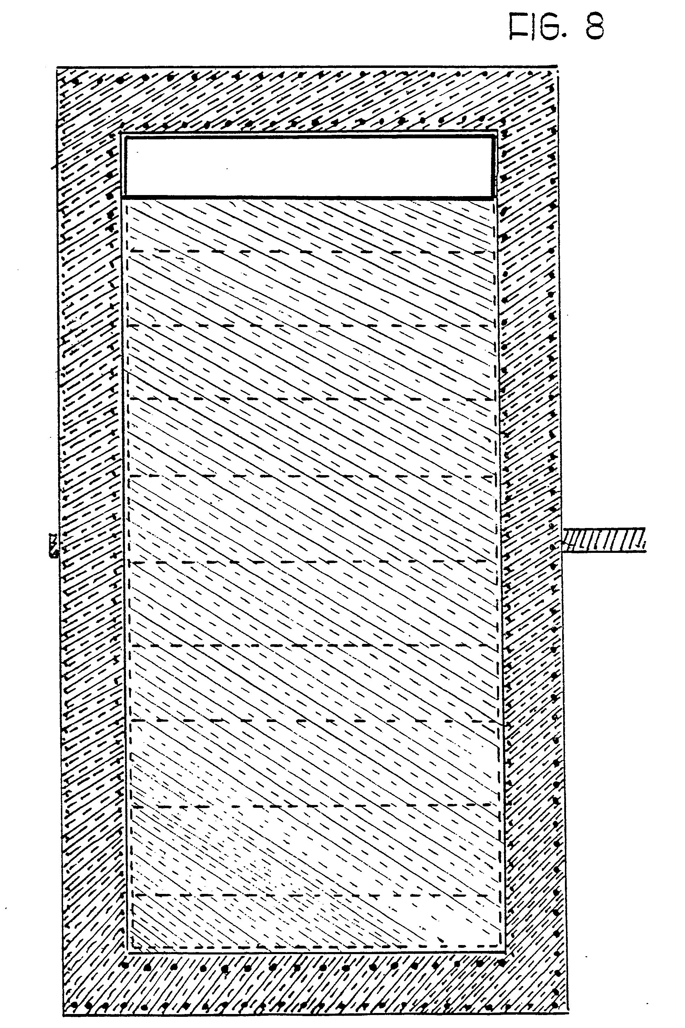

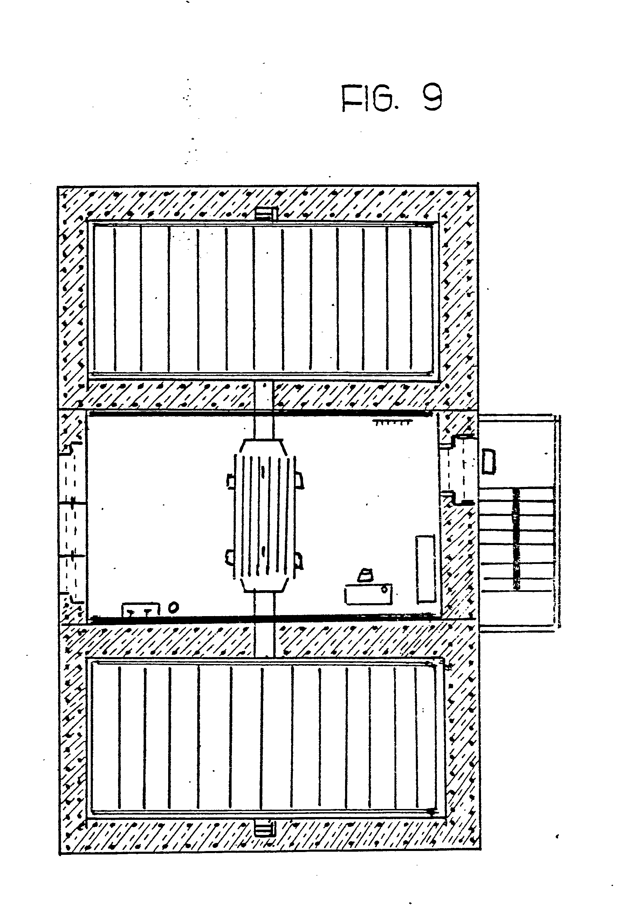

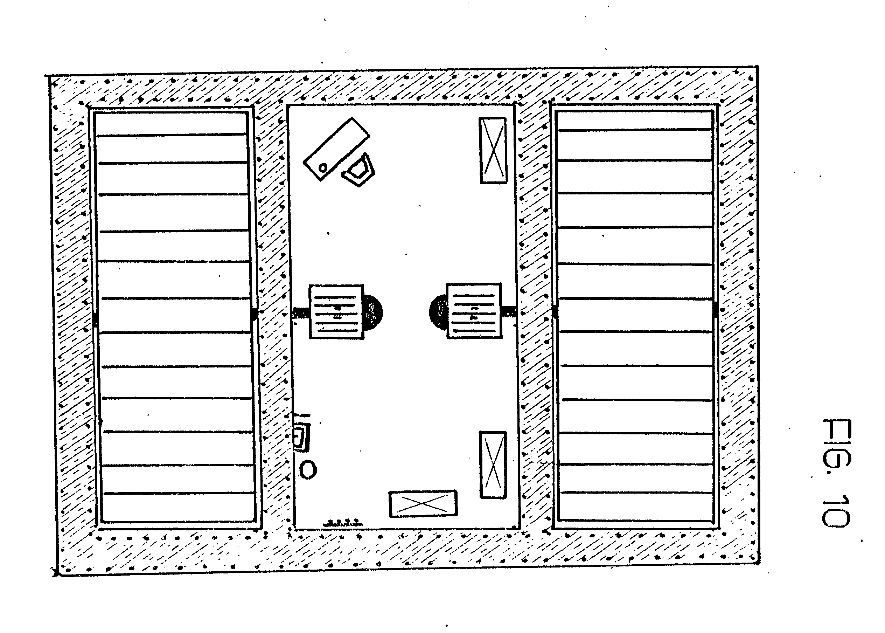

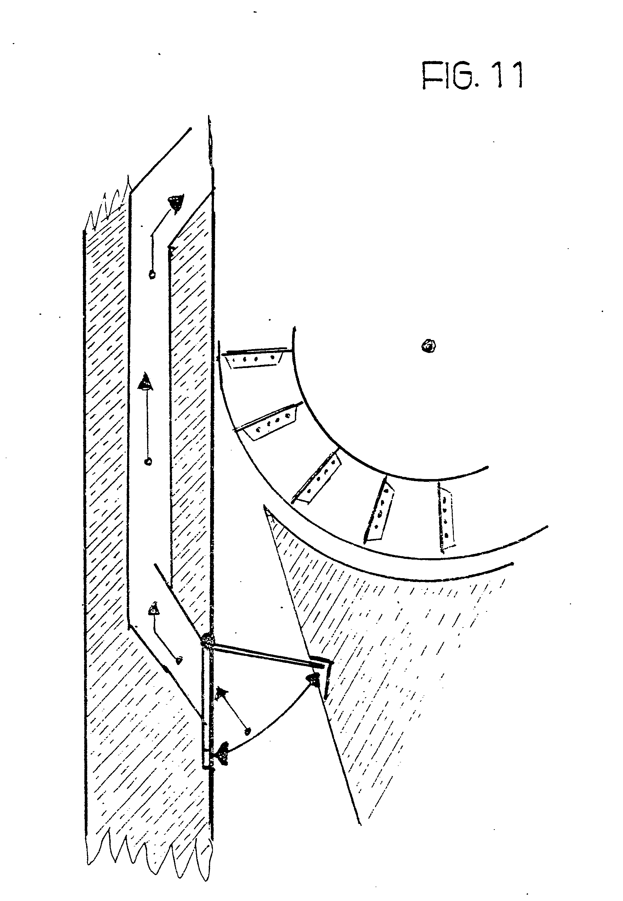

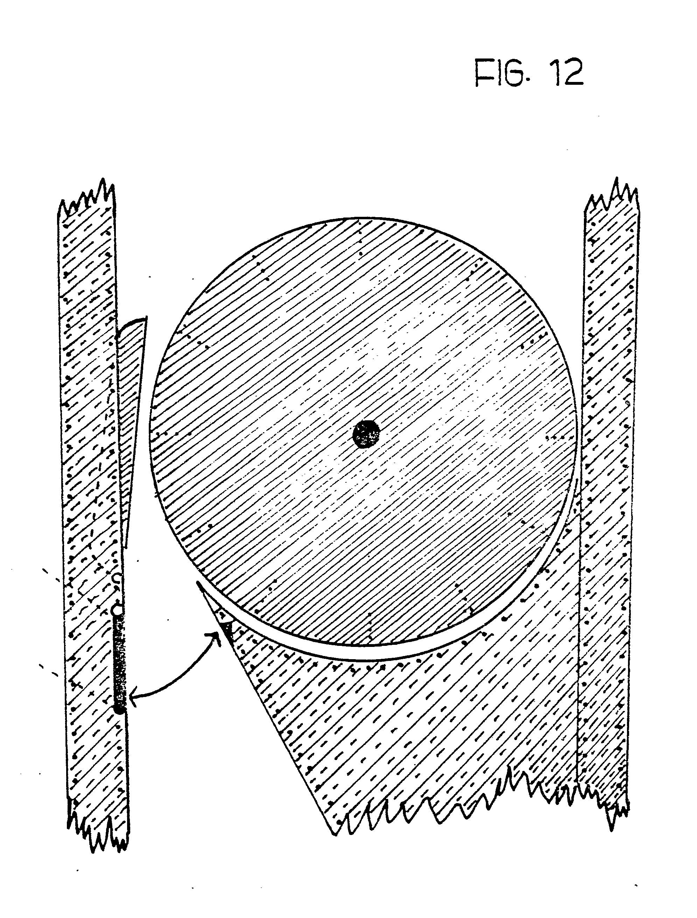

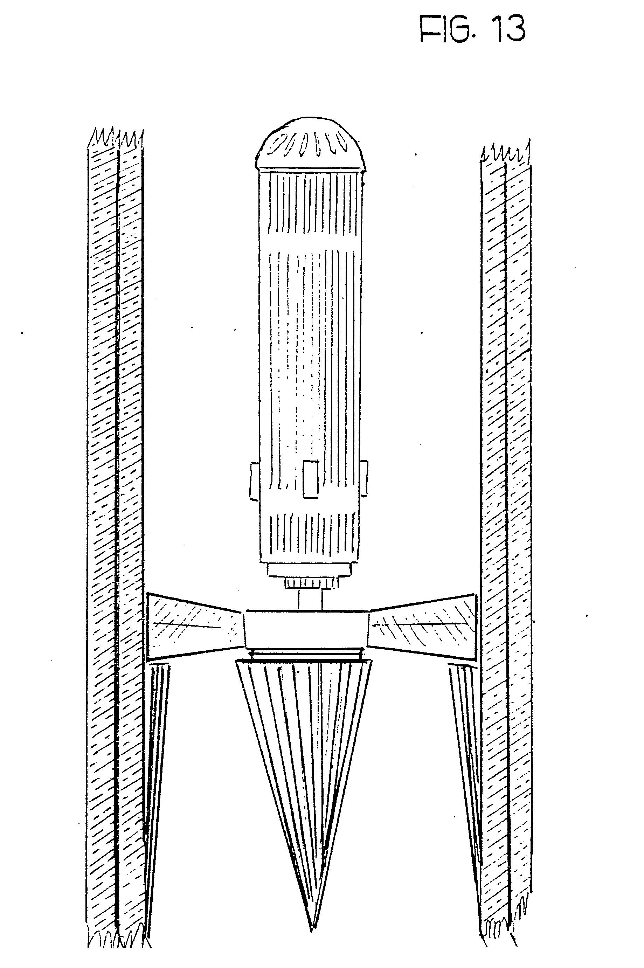

## Patentansprüche

1. Kraftwerk zur Nutzung des natürlichen Luftzugs, wobei in einem Kamin mindestens ein Windturbinenrad oberhalb von Leiteinrichtungen angeordnet ist und einen Generator antreibt, gekennzeichnet durch folgende Merkmale :

a) In einem Berg führen mehrere Stollen schräg nach oben und münden in den Fuß des senkrecht nach oben gebauten Kaminschachts.

b) Als Leiteinrichtung befindet sich in mindestens 80 m Höhe ein Keil, durch welchen die Luftströmung beschleunigt wird.

c) 10 m unterhalb des Keils müssen die Wände des Kamins ganz glatt sein.

2. Kraftwerk nach Anspruch 1, dadurch gekennzeichnet, daß auf der Höhe des Keils und des oder der Windturbinenräder in dem Kaminschacht ein Bypaßkanal angeordnet ist, welcher mittels eines Schiebers oder einer Stahlklappe verschlossen ist und bei deren Öffnung zum Regeln oder zum Abstellen des Kraftwerks den Luftstrom an dem oder den Turbinenrädern vorbeileitet.

3. Kraftwerk nach Anspruch 1 oder 2, dadurch gekennzeichnet, daß der Kaminschacht einen rechteckigen Querschnitt aufweist und daß das oder die horizontal gelagerten Windräder tangential beaufschlagt werden.

4. Kraftwerk nach Anspruch 1 oder 2, dadurch gekennzeichnet, daß der Kaminschacht einen runden Querschnitt aufweist und daß das Windturbinenrad axial beaufschlagt wird.

5. Kraftwerk nach Anspruch 4, dadurch gekennzeichnet, daß das Windturbinenrad und der Generator in einem Rohr angeordnet sind, welches im Kaminschacht aufgehängt und zu Wartungszwecken mittels einer Laufkatze ein- und ausschiebbar ist.

## Claims

1. Power plant using the natural air current as follows :

At least one wind turbine wheel operating a generator has to be placed in a chimney above the air conducting equipment, according to the following description :

a) In a mine, several tunnels slope upwards and lead into the chimney pit built vertically towards the top.

b) As a piece of conducting equipment, there is a wedge increasing the speed of the air current.

c) 10 m below the wedge the chimney walls have to be absolutely smooth.

2. Power plant according to n° 1, described as follows :

At the level of the wedge and of the wind turbine wheel or wheels in the chimney pit there is a by-pass channel closed by means of a sliding shutter or a steel trap ; on opening the same in order to regulate or to stop the operation of the power plant, the air current gets past the turbine wheels.

3. Power plant according to n° 1 or 2, described as follows :

The chimney pit as a rectangular cross section and the air admission to the horizontal wind wheels is tangential.

4. Power plant according to n° 1 or 2, described as follows :

The chimney pit has a circular cross section and the air admission to the wind turbine wheel is axial.

5. Power plant according to n° 4 described as follows :

The wind turbine wheel and the generator are situated in a tube suspended in the chimney pit which can be pushed in and exhausted for maintenance purposes by means of a trolley.

**Revendications**

1. Usine génératrice pour l'exploitation du courant d'air naturel comme suit :

Dans une cheminée, au-dessus de l'équipement de conduite, il y a au moins une turbine éolienne qui actionne un générateur, et voici comment :

a) Dans une mine, plusieurs galeries mènent en biais vers le haut jusqu'au pied de la cheminée construite verticalement.

b) A 80 m au moins de hauteur, il y a une chicane comme pièce de l'équipement de conduite par laquelle le courant d'air est activé.

c) 10 m au-dessous de la chicane, les murs de la cheminée doivent être absolument lisses.

2. Usine génératrice conformément au n° 1 avec la description suivante :

Au niveau de la chicane et des turbines éoliennes dans la cheminée il y a un canal « by-pass » fermé par une coulisse ou un clapet d'acier qui peut être ouvert pour régler ou arrêter l'usine génératrice en faisant passer le courant d'air devant la ou les turbines éoliennes.

3. Usine génératrice conformément au n° 1 ou 2 avec la description suivante :

La cheminée a une coupe transversale rectangulaire et l'admission de l'air de la ou des éoliennes horizontales est tangentielle.

4. Usine génératrice conformément au n° 1 ou 2 avec la description suivante :

La cheminée a une coupe transversale circulaire et l'admission de l'air de la turbine éolienne est axiale.

5. Usine génératrice conformément au n° 4 avec la description suivante :

La turbine éolienne et le générateur sont situés dans un tuyau télescopique suspendu dans la cheminée, pourvu d'un treuil pour l'entretien.

FIG. 1

FIG. 2

FIG. 3

FIG. 4

# FIG. 5

# FIG. 6

FIG. 7

FIG. 8

FIG. 9

FIG. 10

FIG. 11

FIG. 12

FIG. 13